# EUROPEAN PATENT APPLICATION

(11) **EP 2 068 098 A1**
(43) Date of publication of application: **10.06.2009**
(21) Application number: 07793062.6
(22) Date of filing: 28.08.2007
(51) Int. Cl.: F25B 1/00

(54) **AIR CONDITIONER**

(30) Priority: 11.09.2006 JP 2006246156
(71) Applicant: Daikin Industries, Ltd., Osaka 530-8323 (JP)
(72) Inventor: KASAHARA, Shinichi, Sakai-shi Osaka 591-8511 (JP); OKAMOTO, Masakazu, Sakai-shi Osaka 591-8511 (JP)
(74) Representative: HOFFMANN EITLE
(86) International application number: PCT/JP2007/066618
(87) International publication number: WO 2008/032559

(57) **Abstract**

An object of the present invention is to control an indoor space to a temperature equal to a set temperature during a heating operation in an air conditioning apparatus in which a refrigerant reaches a supercritical state during the refrigeration cycle. An air conditioning apparatus (1) according to the present invention is an air conditioning apparatus filled with a supercritical refrigerant, the apparatus comprising a compression mechanism (11), a radiator (31a, 31b), an expansion mechanism (33a, 33b), an evaporator (13), a first temperature detector (36a, 36b), a target refrigerant temperature derivation unit (38a, 38b), and a control unit (39a, 39b). The target refrigerant temperature derivation unit uses at least a set temperature to determine a target refrigerant temperature, the set temperature being the temperature set relative to the air in the space in which the radiator is disposed, and the target refrigerant temperature being the target temperature of the refrigerant flowing between the outlet side of the radiator and the refrigerant inflow side of the expansion mechanism. The control unit controls the expansion mechanism so that the temperature detected by the first temperature detector corresponds to the target refrigerant temperature.

## Description

### TECHNICAL FIELD

The present invention relates to an air conditioning apparatus, and particularly to an air conditioning apparatus wherein a refrigerant reaches a supercritical state during a refrigeration cycle.

### BACKGROUND ART

Heat-pump air conditioning apparatuses in which carbon dioxide is used as a refrigerant have recently come to be manufactured and sold.

In an air conditioning apparatus in which a fluorocarbon refrigerant is used as a refrigerant, the degree of subcooling is controlled for the refrigerant flowing out of the indoor heat exchanger or the refrigerant flowing into the expansion mechanism during heating, and the heating capacity is appropriately controlled. However, in a heat-pump air conditioning apparatus such as described above in which carbon dioxide is used as the refrigerant, subcooling control such as is described above cannot be performed because the refrigerant delivered to the indoor heat exchanger during heating is in a supercritical state. In other words, the heating capacity cannot be appropriately controlled.

As a countermeasure to such problems, a proposal in the past has been "to control an expansion valve so that the difference between the intake air temperature and the radiator outlet temperature in the indoor unit remains within a predetermined range" (for example, see Patent Document 1).

### <Patent Document 1>

Japanese Laid-open Patent Application No. 2003-176957

### DISCLOSURE OF THE INVENTION

### <Technical Problem>

However, it is extremely difficult to control the temperature of an indoor space at the set temperature by merely controlling an expansion valve so that the difference between the intake air temperature and the radiator outlet temperature in the indoor unit remains within a predetermined range as described above.

An object of the present invention is to control the temperature of an indoor space at a set temperature during a heating operation in an air conditioning apparatus in which the refrigerant reaches a supercritical state during the refrigeration cycle.

### <Solution to Problem>

An air conditioning apparatus according to a first aspect of the patent invention is an air conditioning apparatus filled with a supercritical refrigerant, the apparatus comprising a compression mechanism, a radiator, an expansion mechanism, an evaporator, a first temperature detector, a target refrigerant temperature derivation unit, and a control unit. The term "supercritical refrigerant" used herein refers to a refrigerant that reaches a supercritical state at the high-pressure end of the refrigeration cycle; e.g., carbon dioxide, R410A, or the like. The compression mechanism compresses the refrigerant. The radiator is connected to a refrigerant intake side of the compression mechanism. The expansion mechanism is connected to outlet side of the radiator. The evaporator is connected to refrigerant outflow side of the expansion mechanism and connected to the refrigerant intake side of the compression mechanism. The first temperature detector is provided between the outlet side of the radiator and refrigerant inflow side of the expansion mechanism. The target refrigerant temperature derivation unit uses at least a set temperature to determine a target refrigerant temperature, the set temperature being a temperature set relative to the air in the space in which the radiator is disposed, and the target refrigerant temperature being a target temperature of the refrigerant flowing between the outlet side of the radiator and the refrigerant inflow side of the expansion mechanism. The target refrigerant temperature may be determined by a method for deriving a target refrigerant temperature determined in advance in accordance with the conditions on the basis of a table, a function, or the like; a method for determining a target refrigerant temperature by incorporating the difference between the set temperature and intake temperature, a time derivative of the difference, or another parameter into an FB control loop (the control method may be PID control or model-based control); or another such method. The control unit controls the expansion mechanism so that the temperature detected by the first temperature detector corresponds to the target refrigerant temperature.

In this air conditioning apparatus, the target refrigerant temperature derivation unit uses at least a set temperature to calculate the target refrigerant temperature, which is a target temperature of the refrigerant flowing between the outlet side of the radiator and the refrigerant inflow side of the expansion mechanism, and the control unit controls the expansion mechanism so that the temperature detected by the first temperature detector corresponds to the target refrigerant temperature. Therefore, in this air conditioning apparatus, an appropriate target refrigerant temperature is set according to the set temperature during the heating operation. Consequently, with this air conditioning apparatus, an indoor space can be controlled at a temperature equal to the set temperature during the heating operation.

An air conditioning apparatus according to a second aspect of the present invention is the air conditioning apparatus according to the first aspect of the present invention, wherein a plurality of radiators is provided. A plurality of expansion mechanisms is provided, one for each radiator. A plurality of temperature detectors is provided, one for each radiator.

In this air conditioning apparatus, a plurality of the radiators is provided; a plurality of expansion mechanisms is provided, one for each radiator; and a plurality of temperature detectors is provided, one for each radiator. In other words, the air conditioning apparatus is a multi-type air conditioning apparatus. Thus, an appropriate target refrigerant temperature is set according to the set temperature during the heating operation, as in the description above, even if the air conditioning apparatus is a multi-type air conditioning apparatus. Consequently, with this air conditioning apparatus, an indoor space can be controlled at a temperature equal to the set temperature during the heating operation.

An air conditioning apparatus according to a third aspect of the present invention is the air conditioning apparatus according to the first or second aspect of the present invention, wherein the target refrigerant temperature derivation unit determines the target refrigerant temperature by using at least the set temperature from among parameters including the set temperature, the temperature detected by a second temperature detector disposed in proximity to an air blower for blowing air to the radiator, the pressure of the refrigerant flowing from the refrigerant discharge side of the compression mechanism to the refrigerant inflow side of the expansion mechanism, the temperature of the refrigerant discharged from the compression mechanism, the pressure of the refrigerant flowing into the radiator, and the temperature of the refrigerant flowing into the radiator. The pressure of the refrigerant flowing into the radiator and the temperature of the refrigerant flowing into the radiator are effective parameters for reliably determining the target refrigerant temperature in an air conditioning apparatus having temperature detector on the high-temperature side of the radiator (indoor heat exchangers), such as a multi-type air conditioning apparatus for a building. In such an air conditioning apparatus, the temperature of the refrigerant flowing in proximity to the inlet of the radiator (indoor heat exchanger) is often lower than the temperature of the discharged refrigerant because of heat loss in the communication pipes and other areas, and the pressure of the refrigerant flowing in proximity to the inlet of the radiator (indoor heat exchanger) is often less than the pressure of the discharged refrigerant because of pressure loss in the communication pipes and other areas.

In this air conditioning apparatus, the target refrigerant temperature derivation unit determines the target refrigerant temperature by using at least the set temperature from among parameters including the set temperature, the temperature detected by second temperature detector disposed in proximity to an air blower for blowing air to the radiator, the pressure of the refrigerant flowing from the refrigerant discharge side of the compression mechanism to the refrigerant inflow side of the expansion mechanism, the temperature of the refrigerant discharged from the compression mechanism, the pressure of the refrigerant flowing into the radiator, and the temperature of the refrigerant flowing into the radiator. Therefore, in this air conditioning apparatus, the optimal control for the expansion mechanism can be implemented according to the operating conditions.

An air conditioning apparatus according to a fourth aspect of the present invention is the air conditioning apparatus according to any of the first through third aspects of the present invention, further comprising a first gain-varying unit. The first gain-varying unit varies the gain pertaining to control of the expansion mechanism in accordance with the temperature detected by the first temperature detector and at least one of the pressure of the refrigerant flowing from the refrigerant discharge side of the compression mechanism to the refrigerant inflow side of the expansion mechanism, and the temperature of the refrigerant discharged from the compression mechanism.

In this air conditioning apparatus, the first gain-varying unit varies the gain pertaining to control of the expansion mechanism in accordance with the temperature detected by the first temperature detector and at least one of the pressure of the refrigerant flowing from the refrigerant discharge side of the compression mechanism to the refrigerant inflow side of the expansion mechanism, and the temperature of the refrigerant discharged from the compression mechanism. Therefore, in this air conditioning apparatus, the heating capacity is appropriately controlled. Consequently, in this air conditioning apparatus, there is no insufficient or excessive heating, energy consumption is reduced, and the room is made more comfortable.

An air conditioning apparatus according to a fifth aspect of the present invention is the air conditioning apparatus according to any of the first through third aspects of the present invention, further comprising a second gain-varying unit. The second gain-varying unit varies the gain pertaining to the determination of the target refrigerant temperature by the target refrigerant temperature derivation unit in accordance with the temperature detected by the first temperature detector and at least one of the pressure of the refrigerant flowing from the refrigerant discharge side of the compression mechanism to the refrigerant inflow side of the expansion mechanism, and the temperature of the refrigerant discharged from the compression mechanism. This type of second gain-varying unit functions effectively only in cases in which the target refrigerant temperature is determined through a feedback control loop or the like.

In this air conditioning apparatus, the second gain-varying unit varies the gain pertaining to the determination of the target refrigerant temperature by the target refrigerant temperature derivation unit in accordance with the temperature detected by the first temperature detector and at least one of the pressure of the refrigerant flowing from the refrigerant discharge side of the compression mechanism to the refrigerant inflow side of the expansion mechanism, and the temperature of the refrigerant discharged from the compression mechanism. Therefore, in this air conditioning apparatus, the heating capacity is appropriately controlled. Consequently, in this air conditioning apparatus, there is no insufficient or excessive heating, energy consumption is reduced, and the room is made more comfortable.

### <Advantageous Effects of Invention>

In the air conditioning apparatus according to the first aspect of the present invention, an appropriate target refrigerant temperature is set according to the set temperature during the heating operation. Consequently, with this air conditioning apparatus, an indoor space can be controlled at a temperature equal to the set temperature during the heating operation.

In the air conditioning apparatus according to the second aspect of the present invention, an indoor space can be controlled at a temperature equal to the set temperature during the heating operation.

In the air conditioning apparatus according to the third aspect of the present invention, the optimal control for the expansion mechanism can be implemented according to the operating conditions.

In the air conditioning apparatus according to the fourth aspect of the present invention, the heating capacity is appropriately controlled. Consequently, with this air conditioning apparatus, there is no insufficient or excessive heating, energy consumption is reduced, and the room is made more comfortable.

In the air conditioning apparatus according to the fifth aspect of the present invention, the heating capacity is appropriately controlled. Consequently, with this air conditioning apparatus, there is no insufficient or excessive heating, energy consumption is reduced, and the room is made more comfortable.

### BRIEF DESCRIPTION OF THE DRAWINGS

FIG. 1 is a refrigerant circuit diagram of an air conditioning apparatus according to an embodiment of the present invention.
FIG. 2 is a block diagram of the control performed by the indoor control device in an air conditioning apparatus according to an embodiment of the present invention.
FIG. 3 is an image diagram of the control table used in the control performed by the indoor control device in an air conditioning apparatus according to an embodiment of the present invention.
FIG. 4 is an image diagram of the control table used in the control performed by the indoor control device in an air conditioning apparatus according to Modification (F).

### DESCRIPTION OF THE REFERENCE SYMBOLS

- 1: Air conditioning apparatus
- 11: Compressor (compression mechanism)
- 13: Outdoor heat exchanger
- 31a, 31b: Indoor heat exchanger
- 32a, 32b: Indoor fan (air blower)
- 33a, 33b: Indoor electrical expansion valve (expansion mechanism)
- 35a, 35b: First intake temperature sensor (second temperature detector)
- 36a, 36b: First indoor heat exchanger low-temperature sensor (first temperature detector)
- 38a: Radiator outlet temperature target value derivation unit (target refrigerant temperature derivation unit)
- 39a: Expansion valve control unit (control unit)

### BEST MODE FOR CARRYING OUT THE INVENTION

### <Configuration of Air Conditioning Apparatus>

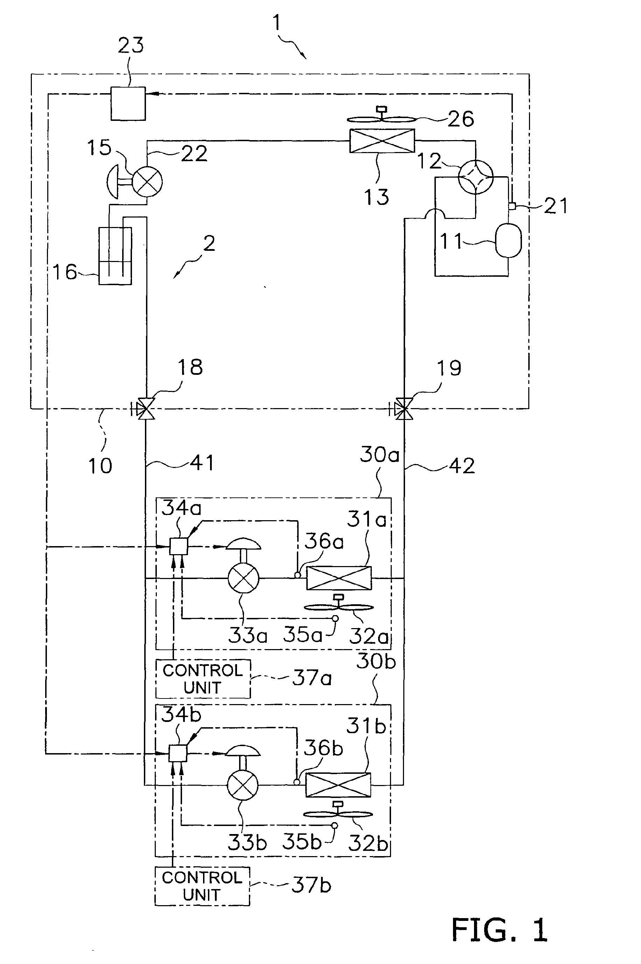

FIG. 1 shows a schematic refrigerant circuit 2 of an air conditioning apparatus 1 according to an embodiment of the present invention.

The air conditioning apparatus 1 is a multi-type air conditioning apparatus using carbon dioxide as a refrigerant and being capable of cooling and heating operations, and is configured primarily from a refrigerant circuit 2, air-blowing fans 26, 32a, 32b, an outdoor control device 23, indoor control devices 34a, 34b, a high-pressure sensor 21, indoor heat exchanger low-temperature sensors 36a, 36b, intake temperature sensors 35a, 35b, and other components.

The refrigerant circuit 2 is provided primarily with a compressor 11, a four-way switching valve 12, an outdoor heat exchanger 13, an outdoor electrical expansion valve 15, a liquid receiver 16, indoor electrical expansion valves 33a, 33b, and indoor heat exchangers 31a, 31b, wherein these devices are all connected via refrigerant pipes as shown in FIG. 1.

In the present embodiment, the air conditioning apparatus 1 is a separate-type air conditioning apparatus, and can be regarded as being configured from a first indoor unit 30a having primarily a first indoor heat exchanger 31a, a first indoor fan 32a, a first indoor electrical expansion valve 33a, a first indoor control device 34a, a first indoor heat exchanger low-temperature sensor 36a, and a first intake temperature sensor 35a; a second indoor unit 30b having primarily a second indoor heat exchanger 31b, a second indoor fan 32b, a second indoor electrical expansion valve 33b, a second indoor control device 34b, a second indoor heat exchanger low-temperature sensor 36b, and a second intake temperature sensor 35b; an outdoor unit 10 having primarily the compressor 11, the four-way switching valve 12, the outdoor heat exchanger 13, the outdoor electrical expansion valve 15, the liquid receiver 16, a high-pressure sensor 21, and an outdoor control device 23; a first communication pipe 41 for connecting the liquid refrigerant pipes of the indoor units 30a, 30b with the liquid refrigerant pipe of the outdoor unit 10; and a second communication pipe 42 for connecting the refrigerant gas pipes of the indoor units 30a, 30b with the refrigerant gas pipe of the outdoor unit 10. The liquid refrigerant pipe of the outdoor unit 10 and the first communication pipe 41 are connected via a first close valve 18 of the outdoor unit 10, and the refrigerant gas pipe of the outdoor unit 10 and the second communication pipe 42 are connected via a second close valve 19 of the outdoor unit 10.

### (1) Indoor Unit

Since the first indoor unit 30a and the second indoor unit 30b have the same configuration, only the first indoor unit 30a is described here. In the following description, the words "first" can be replaced with "second" and the letters "a" with "b" to fit a description of the second indoor unit 30b.

The first indoor unit 30a has primarily the first indoor heat exchanger 31a, the first indoor fan 32a, the first indoor electrical expansion valve 33a, the first indoor control device 34a, the first indoor heat exchanger low-temperature sensor 36a, the first intake temperature sensor 35a, and other components.

The first indoor heat exchanger 31a is a heat exchanger for exchanging heat between the refrigerant and indoor air, which is the air inside the air conditioned room.

The first indoor fan 32a is a fan for drawing air in the air conditioned room into the unit 30a and blowing conditioned air back into the air conditioned room after the air has exchanged heat with the refrigerant via the first indoor heat exchanger 31 a.

The first indoor electrical expansion valve 33a is a component for reducing the pressure of the liquid refrigerant flowing in through the liquid receiver 16 (during the cooling operation) or the supercritical refrigerant flowing out from the low-temperature side of the indoor heat exchanger 31 (during the heating operation).

The first indoor heat exchanger low-temperature sensor 36a is disposed in proximity to the liquid side (or low-temperature side) of the first indoor heat exchanger 31a.

The first intake temperature sensor 35a is disposed in proximity to the first indoor fan 32a.

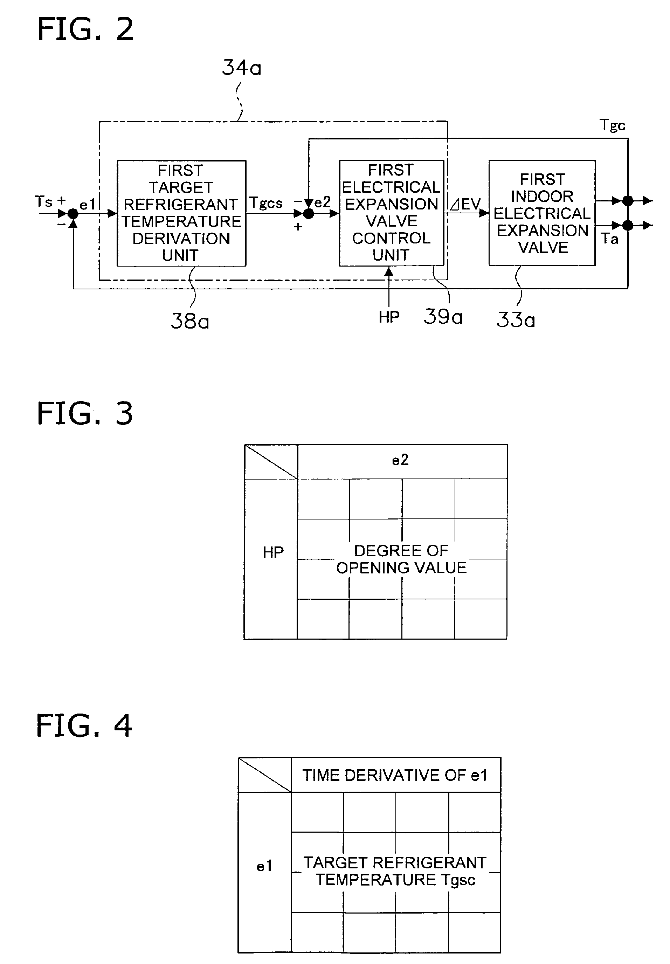

The first indoor control device 34a is configured primarily from a first target refrigerant temperature derivation unit 38a and a first expansion valve control unit 39a, as shown in FIG. 2. The first indoor control device 34a is communicably connected to the first indoor heat exchanger low-temperature sensor 36a, the first intake temperature sensor 35a, a control unit 37a, and the outdoor control device 23, as shown in FIG. 1. During the heating operation, the first target refrigerant temperature derivation unit 38a receives information of a set temperature Ts from the control unit 37a every time the set temperature Ts is changed in the control unit 37a, and periodically receives information of an intake temperature Ta from the first intake temperature sensor 35a. The first target refrigerant temperature derivation unit 38a subtracts the intake temperature Ta from the set temperature Ts to calculate a first temperature difference e1, and substitutes the first temperature difference e 1 into a predetermined function prepared in advance to calculate a target temperature T_{gcs} of the refrigerant flowing in proximity of the liquid side (or low-temperature side) of the first indoor heat exchanger 31a. The first expansion valve control unit 39a periodically receives information of the target temperature T_{gcs} of the refrigerant flowing in proximity to the liquid side (or low-temperature side) of the first indoor heat exchanger 31a from the first target refrigerant temperature derivation unit 38a, periodically receives information of the actual temperature T_{gc} from the first indoor heat exchanger low-temperature sensor 36a, and subtracts the temperature T_{gc} from the target temperature T_{gcs} to calculate a temperature difference e2. The first expansion valve control unit 39a determines and controls the degree of opening of the first indoor electrical expansion valve 33a on the basis of the second temperature difference e2. Carbon dioxide is used as the refrigerant in the air conditioning apparatus 1 according to the present embodiment. Temperature changes in carbon dioxide in a supercritical state under constant pressure are not uniform (not proportionate) with respect to changes in enthalpy. In other words, there are cases in which the necessary amount of change in heating capacity differs even when the second temperature difference e2 is the same. Therefore, in the air conditioning apparatus 1 according to the present embodiment, the gain with respect to control of the degree of opening of the first indoor electrical expansion valve 33a is changed according to high-pressure HP information (obtained from the high-pressure sensor 21) sent to the first indoor control device 34a via the outdoor control device 23. Specifically, a control table (see FIG. 3) associating the degree of opening of the first indoor electrical expansion valve 33a with the second temperature difference e2 and the high pressure HP is made in advance, and the first expansion valve control unit 39a determines the degree of opening of the first indoor electrical expansion valve 33a by checking the periodically obtained second temperature difference e2 and high pressure HP against the control table. In case of a high actual temperature T_{gc}, the gain of the change in the degree of opening of the expansion valve must be set lower in comparison with a low actual temperature T_{gc}. This is because the ratio of dh/dT (the rate of change in enthalpy when the radiator outlet temperature (T_{gc}) changes under a constant high pressure) does not change much even when subcooling is increased in subcritical regions deviated from the critical point of carbon dioxide or R410A, but the ratio of dh/dT tends to increase significantly as the radiator outlet temperature (T_{gc}) increases in the supercritical regions of R410A and in the supercritical regions and near-supercritical subcritical regions of carbon dioxide.

By employing such a configuration, the first indoor unit 30a can create conditioned air (cool air) during the cooling operation by exchanging heat between the indoor air taken in by the first indoor fan 32a and the liquid refrigerant flowing through the first indoor heat exchanger 31a, and can create conditioned air (warm air) during the heating operation by exchanging heat between the indoor air taken in by the first indoor fan 32a and the supercritical refrigerant flowing through the first indoor heat exchanger 31a.

### (2) Outdoor Unit

The outdoor unit 10 has primarily the compressor 11, the four-way switching valve 12, the outdoor heat exchanger 13, the outdoor electrical expansion valve 15, the liquid receiver 16, an outdoor fan 26, the outdoor control device 23, the high-pressure sensor 21, and other components.

The compressor 11 is a device for sucking in the low-pressure refrigerant gas flowing through an intake tube, compressing the refrigerant to a supercritical state, and then discharging the refrigerant to a discharge tube.

The four-way switching valve 12 is a valve for switching the direction of refrigerant flow in accordance with the operations, and is capable of connecting the discharge side of the compressor 11 with the high-temperature side of the outdoor heat exchanger 13 and connecting the intake side of the compressor 11 with the gas side of the indoor heat exchangers 31a, 31b during the cooling operation, and is capable of connecting the discharge side of the compressor 11 with the second close valve 19 and connecting the intake side of the compressor 11 with the gas side of the outdoor heat exchanger 13 during the heating operation.

The outdoor heat exchanger 13 is capable of cooling the high-pressure supercritical refrigerant discharged from the compressor 11 using air outside of the air conditioned room as a heat source during the cooling operation, and of evaporating the liquid refrigerant returning from the indoor heat exchangers 31a, 31b during the heating operation.

The outdoor electrical expansion valve 15 is a component for reducing the pressure of the supercritical refrigerant flowing out from the low-temperature side of the outdoor heat exchanger 13 (during the cooling operation) or the liquid refrigerant flowing in through the liquid receiver 16 (during the heating operation).

The liquid receiver 16 is a component for storing excess refrigerant in accordance with the operating mode or the air conditioning load.

The outdoor fan 26 is a fan for taking outdoor air into the unit 10 and expelling out air after the air has exchanged heat with the refrigerant via the outdoor heat exchanger 13.

The high-pressure sensor 21 is provided to the discharge side of the compressor 11.

The outdoor control device 23 is communicably connected to the high-pressure sensor 21, the indoor control devices 34a, 34b, and other components, and the outdoor control device 23 transmits high-pressure information sent from the high-pressure sensor 21 to the indoor control devices 34a, 34b and other components.

### <Operation of Air Conditioning Apparatus>

The operating action of the air conditioning apparatus 1 is described using FIG. 1. The air conditioning apparatus 1 is capable of performing a cooling operation and a heating operation, as described above.

### (1) Cooling Operation

During the cooling operation, the four-way switching valve 12 is in the state shown by the solid lines in FIG. 1; i.e., the discharge side of the compressor 11 is connected to the high-temperature side of the outdoor heat exchanger 13, and the intake side of the compressor 11 is connected to the second close valve 19. At this time the first close valve 18 and the second close valve 19 are in an open state.

When the compressor 11 is activated in this state of the refrigerant circuit 2, the refrigerant gas is sucked into the compressor 11 and compressed to a supercritical state, and then is sent to the outdoor heat exchanger 13 via the four-way switching valve 12 and cooled in the outdoor heat exchanger 13.

The cooled supercritical refrigerant is then sent to the outdoor electrical expansion valve 15. The supercritical refrigerant sent to the outdoor electrical expansion valve 15 is reduced in pressure to become saturated, and is then sent to the indoor electrical expansion valves 33a, 33b via the liquid receiver 16. The saturated refrigerant sent to the indoor electrical expansion valves 33a, 33b is supplied to the indoor heat exchangers 31a, 31b after being reduced in pressure to a liquid refrigerant, the refrigerant cools the indoor air, and the refrigerant is evaporated into a refrigerant gas.

The refrigerant gas is then sucked back into the compressor 11 via the second close valve 19 and the four-way switching valve 12. Thus, the cooling operation is performed.

### (2) Heating Operation

During the heating operation, the four-way switching valve 12 is in the state shown by the dashed lines in FIG. 1; i.e., the discharge side of the compressor 11 is connected to the second close valve 19, and the intake side of the compressor 11 is connected to the gas side of the outdoor heat exchanger 13. At this time, the first close valve 18 and the second close valve 19 are in an open state.

When the compressor 11 is activated in this state of the refrigerant circuit 2, the refrigerant gas is sucked into the compressor 11 and compressed to a supercritical state, and is then supplied to the indoor heat exchangers 31a, 31b via the four-way switching valve 12 and the second close valve 19.

The supercritical refrigerant then heats the indoor air in the indoor heat exchangers 31a, 31b and the refrigerant is cooled. The cooled supercritical refrigerant is sent to the indoor electrical expansion valves 33a, 33b. The supercritical refrigerant sent to the indoor electrical expansion valves 33a, 33b is reduced in pressure to become saturated, and is then sent to the outdoor electrical expansion valve 15 via the liquid receiver 16. The saturated refrigerant sent to the outdoor electrical expansion valve 15 is sent to the outdoor heat exchanger 13 after being reduced in pressure to a liquid refrigerant, and is evaporated in the outdoor heat exchanger 13 into a refrigerant gas. The refrigerant gas is sucked back into the compressor 11 via the four-way switching valve 12. Thus, the heating operation is performed. The control described above is implemented during the heating operation.

### <Characteristics of Air Conditioning Apparatus>

### (1)

In the air conditioning apparatus 1 according to the present embodiment, during the heating operation in the first indoor control device 34a, the first target refrigerant temperature derivation unit 38a subtracts the intake temperature Ta from the set temperature Ts to calculate the first temperature difference e1, and substitutes the first temperature difference e1 into a predetermined function prepared in advance to calculate the target temperature T_{gcs} of the refrigerant flowing in proximity to the liquid side (or low-temperature side) of the first indoor heat exchanger 31 a. The first expansion valve control unit 39a then determines and controls the degree of opening of the first indoor electrical expansion valve 33a on the basis of the second temperature difference e2. Therefore, in the air conditioning apparatus 1, an appropriate target temperature T_{gcs} is set according to the set temperature during the heating operation. Consequently, in the air conditioning apparatus 1, an indoor space can be controlled to a temperature equal to the set temperature during the heating operation.

### (2)

In the air conditioning apparatus 1 according to the present embodiment, the first expansion valve control unit 39a changes the gain with respect to control of the degree of opening of the first indoor electrical expansion valve 33a according to the information (obtained from the high-pressure sensor 21) on the high pressure HP. Therefore, the heating capacity is appropriately controlled in the air conditioning apparatus 1. Consequently, with the air conditioning apparatus 1, there is no insufficient or excessive heating, energy consumption is reduced, and the room is made more comfortable.

### <Modifications>

### (A)

In the air conditioning apparatus 1 according to the previous embodiment, the first temperature difference e 1 was used in order for the first target refrigerant temperature derivation unit 38a to calculate the target temperature T_{gcs}, but the set temperature Ts, the intake temperature Ta, or the like may be used independently in order for the first target refrigerant temperature derivation unit 38a to calculate the target temperature T_{gcs}, or a time derivative of the intake temperature Ta, the high pressure HP, the discharge temperature, or another parameter may also be used.

### (B)

In the air conditioning apparatus 1 according to the previous embodiment, the first target refrigerant temperature derivation unit 38a subtracts the intake temperature Ta from the set temperature Ts to calculate the first temperature difference e1, and substitutes the first temperature difference e 1 into a predetermined function prepared in advance to calculate the target temperature T_{gcs} of the refrigerant flowing in proximity to the liquid side (or low-temperature side) of the first indoor heat exchanger 31a. However, the first target refrigerant temperature derivation unit 38a may also calculate the target temperature T_{gcs} of the refrigerant flowing in proximity to the liquid side (or low-temperature side) of the first indoor heat exchanger 31a by checking the first temperature difference e1 against a control table prepared in advance.

### (C)

In the air conditioning apparatus 1 according to the previous embodiment, the first expansion valve control unit 39a determined the degree of opening of the first indoor electrical expansion valve 33a by checking the periodically obtained second temperature difference e2 and the high pressure HP against the control table. However, the first expansion valve control unit 39a may also calculate the degree of opening of the first indoor electrical expansion valve 33a by substituting the periodically obtained second temperature difference e2 and high pressure HP into a predetermined function prepared in advance.

### (D)

Although not particularly mentioned in the previous embodiment, there is a nonlinear relationship between the degree of opening (pulse number) and the actual opening area of the expansion valve. Therefore, it is preferable that such factors be taken into account when the first expansion valve control unit 39a determines the degree of opening of the first indoor electrical expansion valve 33a by checking the second temperature difference e2 and high pressure HP against the control table.

### (E)

Although not particularly mentioned in the previous embodiment, the gain in the range of variation of the target temperature T_{gcs} may be varied not only according to the information on the high pressure HP but also according to the value of the actual temperature T_{gc} when the target temperature T_{gcs} is calculated. In such cases, the first temperature difference e1 or another parameter may be incorporated into an FB control loop (the control method may be PID control or model-based control) to calculate the target refrigerant temperature.

### (F)

In the air conditioning apparatus 1 according to the previous embodiment, the first target refrigerant temperature derivation unit 38a subtracted the intake temperature Ta from the set temperature Ts to calculate the first temperature difference e1, and substituted the first temperature difference e1 into a predetermined function prepared in advance to calculate the target temperature T_{gcs} of the refrigerant flowing in proximity to the liquid side (or low-temperature side) of the first indoor heat exchanger 31 a. However, the first target refrigerant temperature derivation unit 38a may also subtract the intake temperature Ta from the set temperature Ts to calculate the first temperature difference e1, and determine the target temperature T_{gcs} of the refrigerant flowing in proximity to the liquid side (or low temperature side) of the first indoor heat exchanger 31a by checking the first temperature difference e 1 and the time derivative of the first temperature difference e1 against a control table such as the one shown in FIG. 4. In such cases, the first expansion valve control unit 39a can determine and control the degree of opening of the first indoor electrical expansion valve 33a on the basis of the second temperature difference e2, and there is no need to check the second temperature difference e2 and the high pressure HP against the control table to determine the degree of opening of the first indoor electrical expansion valve 33a.

### (G)

Although not particularly mentioned in the previous embodiment, the present invention may also be applied to a heating/cooling free-type, multi-type air conditioning apparatus.

### (H)

Although not particularly mentioned in the previous embodiment, the present invention may also be applied to a pair-type air conditioning apparatus.

### (I)

In the air conditioning apparatus 1 according to the previous embodiment, the first target refrigerant temperature derivation unit 38a subtracted the intake temperature Ta from the set temperature Ts to calculate the first temperature difference e1, and substituted the first temperature difference e 1 into a predetermined function prepared in advance to calculate the target temperature T_{gcs} of the refrigerant flowing in proximity to the liquid side (or low-temperature side) of the first indoor heat exchanger 31 a. However, the first target refrigerant temperature derivation unit 38a may also incorporate the first temperature difference e1 into an FB loop (the control method may be PID control or model-based control) to calculate the target refrigerant temperature. In this example, in cases in which the set temperature Ts is suddenly changed by a user input or the like, it is preferable that FF (feed forward) control be implemented in addition to FB control and that a preset value be used.

### (J)

Although not particularly mentioned in the previous embodiment, when the gain with respect to control of the degree of opening of the first indoor electrical expansion valve 33a is varied, the gain may be varied using FB control, FF control, a combination of FB control and FF control, PID control, model-based control, or another type of control.

### INDUSTRIAL APPLICABILITY

The air conditioning apparatus according to the present invention has the characteristic of being able to control an indoor space at a temperature equal to a set temperature during the heating operation, and the present invention is particularly useful for air conditioning apparatuses that use carbon dioxide or the like as a refrigerant.

## Claims

1. An air conditioning apparatus filled with a supercritical refrigerant, the air conditioning apparatus comprising:
a compression mechanism (11) configured to compress the refrigerant;
a radiator (31a, 31b) connected to a refrigerant intake side of the compression mechanism;
an expansion mechanism (33a, 33b) connected to outlet side of the radiator;
an evaporator (13) connected to refrigerant outflow side of the expansion mechanism and connected to the refrigerant intake side of the compression mechanism;
a first temperature detector (36a, 36b) provided between the outlet side of the radiator and refrigerant inflow side of the expansion mechanism;
a target refrigerant temperature derivation unit (38a) configured to use at least a set temperature to determine a target refrigerant temperature, the set temperature being a temperature set relative to the air in the space in which the radiator is disposed, and the target refrigerant temperature being a target temperature of the refrigerant flowing between the outlet side of the radiator and the refrigerant inflow side of the expansion mechanism; and
a control unit (39a) configured to control the expansion mechanism so that the temperature detected by the first temperature detector corresponds to the target refrigerant temperature.

2. The air conditioning apparatus according to claim 1, wherein
a plurality of the radiators is provided;
a plurality of the expansion mechanisms is provided, one for each radiator; and
a plurality of the temperature detectors is provided, one for each radiator.

3. The air conditioning apparatus according to claim 1 or 2, wherein
the target refrigerant temperature derivation unit determines the target refrigerant temperature by using at least the set temperature from among parameters including the set temperature, the temperature detected by a second temperature detector (35a, 35b) disposed in proximity to an air blower (32a, 32b) for blowing air to the radiator, the pressure of the refrigerant flowing from the refrigerant discharge side of the compression mechanism to the refrigerant inflow side of the expansion mechanism, the temperature of the refrigerant discharged from the compression mechanism, the pressure of the refrigerant flowing into the radiator, and the temperature of the refrigerant flowing into the radiator.

4. The air conditioning apparatus according to any of claims 1 through 3, further comprising:
a first gain-varying unit configured to vary the gain with respect to control of the expansion mechanism in accordance with the temperature detected by the first temperature detector and at least one of the pressure of the refrigerant flowing from the refrigerant discharge side of the compression mechanism to the refrigerant inflow side of the expansion mechanism, and the temperature of the refrigerant discharged from the compression mechanism.

5. The air conditioning apparatus according to any of claims 1 through 3, further comprising:
a second gain-varying unit configured to vary the gain pertaining to the determination of the target refrigerant temperature by the target refrigerant temperature derivation unit in accordance with the temperature detected by the first temperature detector and at least one of the pressure of the refrigerant flowing from the refrigerant discharge side of the compression mechanism to the refrigerant inflow side of the expansion mechanism, and the temperature of the refrigerant discharged from the compression mechanism.
